# EUROPÄISCHE PATENTSCHRIFT

(11) **EP 2 583 082 B1**
(45) Veröffentlichungstag und Bekanntmachung des Hinweises auf die Patenterteilung: **08.01.2020**
(21) Anmeldenummer: 11717503.4
(22) Anmeldetag: 29.04.2011
(51) Int. Cl.: G01N 21/21, G01N 21/55, G01N 21/47

(54) **SENSOR ZUR BERÜHRUNGSLOSEN BESTIMMUNG DER FAHRBAHNBESCHAFFENHEIT UND DESSEN VERWENDUNG**
SENSOR FOR DETERMINING THE ROADWAY CONDITION WITHOUT CONTACT AND USE THEREOF
CAPTEUR POUR LA DÉTERMINATION, SANS CONTACT, DES CONDITIONS DE LA CHAUSSÉE, ET SON UTILISATION

(30) Priorität: 15.06.2010 DE 102010023856
(43) Veröffentlichungstag der Anmeldung: 24.04.2013
(73) Patentinhaber: WABCO GmbH, 30453 Hannover (DE)
(72) Erfinder: BREUER, Karsten, 88179 Oberreute (DE); DIECKMANN, Thomas, 30982 Pattensen (DE); ESKILDSEN, Jörn, DK-7160 Törring (DK); GERAMI-MANESCH, Bijan, 31303 Burgdorf (DE); PEUSER, Axel, 30938 Großburgwedel (DE); SANDKÜHLER, Dirk, 30926 Seelze (DE)
(74) Vertreter: Lauerwald, Jörg
(86) Internationale Anmeldenummer: PCT/EP2011/002141
(87) Internationale Veröffentlichungsnummer: WO 2011/157319

(56) Entgegenhaltungen:
- EP-A2- 1 111 373
- WO-A2-2004/081897
- DE-A1- 3 205 129
- DE-A1- 3 621 567
- JP-A- 64 084 119
- JP-A- H06 229 917
- JP-A- 2006 046 936

## Beschreibung

Die vorliegende Beschreibung bezieht sich auf Sensoren zur berührungslosen Bestimmung der Fahrbahnbeschaffenheit unter einem Kraftfahrzeug. Insbesondere bezieht sich die vorliegende Beschreibung auf optische Oberflächensensoren zur Erkennung unterschiedlicher Fahrbahnoberflächen wie Asphalt oder Beton, sowie zur Erkennung des Zustands derselben, insbesondere zur Erkennung trockener, nasser, vereister oder schneebedeckter Fahrbahnoberflächen.

Moderne Kraftfahrzeuge verfügen meist standardmäßig über Außentemperatursensoren mit einer entsprechenden Anzeige, um dem Fahrer einen Warnhinweis zu geben, wenn die Außentemperatur unter z.B. + 3°C sinkt. Damit soll der Fahrer vor dem Auftreten von möglicher Eisglätte oder winterlichen Straßenverhältnissen gewarnt werden. Solche Warnhinweise sind jedoch nur allgemeiner Natur und sind unabhängig vom tatsächlichen Fahrbahnzustand, so dass sie vom Fahrer, wenn überhaupt, nur als Randinformation wahrgenommen werden. In der Praxis werden solche Temperaturhinweise häufig ignoriert.

Um Informationen über die sich tatsächlich unter dem Kraftfahrzeug befindende Fahrbahnoberfläche zu erhalten, sind lichtbasierte optische Oberflächensensoren oder mechanische oder akustische Sensoren bekannt.

Die im Stand der Technik bekannten optischen Oberflächensensoren beruhen im Wesentlichen auf zwei Grundprinzipien. Einerseits sind Oberflächensensoren bekannt, welche Licht auf die Fahrbahn aussenden und das diffus reflektierte sowie das an der Fahrbahnoberfläche spiegelnd reflektierte Licht messen. Solche Sensoren basieren auf dem Effekt, dass der Anteil des diffus reflektierten Lichtes mit zunehmender Helligkeit der Fahrbahnoberfläche zunimmt. Somit lassen sich helle, wie beispielsweise schneebedeckte Fahrbahnen von dunklem Asphalt unterscheiden. Wasser und Eis lassen sich mit einem Reflexionsdetektor erkennen, da das auftreffende Licht hier spiegelnd reflektiert wird. Solche Sensoren können mit sichtbarem Licht betrieben werden, haben jedoch den Nachteil, dass die Unterscheidung von Eis und Wasser auf der Fahrbahnoberfläche anhand des reflektierten Lichts nicht zuverlässig möglich ist. Solche Sensoren sind beispielsweise aus der DE 36 21 567 A1 bekannt.

Es sind auch so genannte spektrale Oberflächensensoren bekannt, welche den Effekt ausnutzen, dass unterschiedliche Wellenlängen im Infrarotbereich von Wasser und Eis unterschiedlich absorbiert werden. Ein Vergleich der reflektierten Lichtintensitäten verschiedener Wellenlängen lässt dann auf eine trockene, nasse, oder eisige Fahrbahn schließen. Solche spektrale Infrarotsensoren sind beispielsweise aus der US 4,274,091 oder der DE 197 36 138 bekannt.

Die Patentanmeldung WO2004081897A2 betrifft eine Vorrichtung zur Detektion von Oberflächeneigenschaften bzw. offenbarten Bedingungen, insbesondere Erfassung von Wasser, Schnee und Eis und insbesondere auf Oberflächen mittels einer Detektoreinrichtung in dem Fahrzeug.

Die Vorrichtung umfasst eine Lichtquelleneinheit, zwei Detektoren und Polarisatoren um das von der Fahrbahn diffus und spiegelnd reflektierte Licht mit einem Strahlteiler auf den ersten und zweiten Detektor aufzuteilen.

Das Dokument EP1111373A2 betrifft eine Vorrichtung und ein Verfahren zur Erfassung von Eigenschaften von Materialien durch spektroskopische Messungen, wobei sich während der Messung der Abstand der Materialoberfläche zeitlich und/oder örtlich ändert ("out-of-focus-Lage"). Bei der spektroskopischen Messung wird gleichermassen die spekulare und die diffuse Reflexion an der Materialoberfläche erfasst und in der Detektion und der Messwertverarbeitung wird eine eindeutige Trennung der Information von spekularer und diffuser Reflexion vorgenommen.

Um Oberflächensensoren zu implementieren, sind im Stand der Technik verschiedene Lösungen vorgeschlagen. Jedoch sind diese Lösungen raumgreifend und erfordern die Anbringung mehrerer Lichtquellen und Detektoren, welche zueinander ausgerichtet und kalibriert werden müssen.

Der vorliegenden Erfindung liegt daher die Aufgabe zu Grunde, einen verbesserten Sensor zur Ermittlung der Art und des Zustands einer Fahrbahn bereitzustellen, welcher platzsparend ist und eine hohe Erkennungsgüte bietet. Zusammenfassung der Erfindung
Die Aufgabe wird gelöst durch einen Sensor zur Erkennung einer Beschaffenheit einer Fahrbahn, insbesondere der Oberfläche einer Fahrbahn für ein Kraftfahrzeug gemäß Anspruch 1. Die Beschaffenheit der Fahrbahn kann ein Zustand der Fahrbahnoberfläche, wie nass, trocken, vereist oder schneebedeckt oder eine Kombination daraus umfassen. Die Beschaffenheit der Fahrbahn kann auch die Art der Fahrbahn oder Information über eine Rauhigkeit der Fahrbahnoberfläche, wie z.B. Asphalt, Beton, Split oder Schotter oder eine Kombination daraus umfassen.

Die Anordnung der Emitterachse mit der optischen Achse der Fokussiereinrichtung zumindest teilweise überlagert ermöglicht es, den emittierten Lichtstrahl und das von der Fahrbahnoberfläche reflektierte Licht im Wesentlichen zu überlagern. Dazu kann die zumindest eine Lichtquelleneinheit, eine Emitteroptik und der Lichtquellenpolarisator auf oder an der optischen Achse der Fokussiereinrichtung angeordnet sein. Ferner werden das spiegelnd reflektierte Licht und das diffus reflektierte Licht mit derselben Fokussiereinrichtung gesammelt. Dadurch kann der Sensor kompakt und platzsparend ausgeführt werden. Alle wesentlichen Bauteile können in einem einzigen Gehäuse integriert sein, was einen einfachen, kompakten und damit kostengünstigen Einbau im Fahrzeug erlaubt.

Die optische Achse der Lichtquelleneinheit kann die optische Achse einer vor der Lichtquelleneinheit angeordneten Emitterlinse sein oder durch diese definiert werden.

Die Richtung des reflektierten Lichts, insbesondere des spiegelnd reflektierten Lichts und des diffus reflektierten Lichts, welches die Fokussiereinrichtung erreicht, ist im Verhältnis zur Richtung des ausgesendeten Lichtstrahls um ungefähr 180°, z.B. in einem Winkel im Bereich von ungefähr 170° bis 190° geneigt, d.h. sie sind im Wesentlichen einander entgegengesetzt gerichtet.

Die Fokussiereinrichtung kann eine Sammeloptik umfassen. Die Sammeloptik kann Abmessungen, insbesondere einen Durchmesser haben, welcher größer ist als die Abmessungen der Lichtquelleneinheit und/oder des Durchmessers der Emitterlinse.

Die Fokussiereinrichtung kann eine Sammellinse bzw. Kollektorlinse und/oder andere optische Elemente umfassen, welche dem Fachmann bekannt sind.

Die Lichtquelleneinheit kann im Lichtstrahl vor oder hinter der Fokussiereinrichtung angeordnet sein, das heißt, die Lichtquelleneinheit kann bezüglich der Fokussieranordnung auf der gleichen Seite wie der Strahlteiler, oder auf der dem Strahlteiler gegenüberliegenden Seite angeordnet sein. Die Lichtquelleneinheit kann auch zumindest teilweise in der Fokussiereinrichtung angeordnet sein. Die Fokussiereinrichtung kann eine Aufnahme oder Öffnung aufweisen, welche die Lichtquelleneinheit und/oder die der Lichtquelleneinheit zugeordnete Emitteroptik aufnimmt. Die Öffnung in der Fokussiereinrichtung kann auch dazu ausgelegt sein, von der Lichtquelleneinheit ausgesendetes Licht durchzulassen. Die Öffnung kann im Wesentlichen auf der optischen Achse der Fokussiereinrichtung ausgeführt sein. Die Öffnung kann als Bohrung, insbesondere als Durchgangsbohrung ausgeführt sein. Es kann jedoch auch vorgesehen sein, das von der Lichtquelleneinheit ausgesendete Licht durch zumindest einen Teil der Fokussiereinrichtung zu senden. In diesem Fall liegt die Lichtquelleneinheit auf der gleichen Seite der Fokussiereinrichtung wie der Strahlteiler, und die Lichtquelleneinheit wird durch die Fokussiereinrichtung geschützt. Die Emitteroptik kann entsprechend angepasst sein.

Die Fokussiereinrichtung kann auch einen Parabolspiegel oder eine andere Paraboloptik umfassen, um das von der Fahrbahnoberfläche reflektierte, insbesondere das spiegelnd reflektierte Licht und das diffus reflektierte Licht, zu fokussieren. Im Strahlengang nach dem Parabolspiegel und vor dem Brennpunkt des Parabolspiegels kann der Strahlteiler angeordnet sein.

Vor der Lichtquelleneinheit ist ein Lichtquellenpolarisator angeordnet, welcher das von der zumindest einen Lichtquelle ausgesendete Licht in einer vorbestimmten Richtung polarisiert.

Erfindungsgemäß sind zumindest zwei Polarisatoren bzw. Polarisationsfilter vorgesehen, von denen ein erster Polarisator an dem ersten Detektor so angeordnet ist, dass er nur Lichtwellen in der ersten Polarisationsrichtung zu dem ersten Detektor durchlässt. Ist ein Lichtquellenpolarisator an der Lichtquelleneinheit vorgesehen, ist dessen Polarisationsrichtung im Wesentlichen senkrecht zu der ersten Polarisationsrichtung des ersten Detektors angeordnet und das von der Lichtquelleneinheit ausgesandte Licht ist in einer Richtung im Wesentlichen senkrecht zu der ersten Polarisationsrichtung des ersten Detektors polarisiert, so dass an dem ersten Detektor polarisiertes, spiegelnd reflektiertes Licht herausgefiltert und nur diffus reflektiertes Licht detektiert wird. An dem zweiten Detektor wird sowohl spiegelnd als auch diffus reflektiertes Licht erfasst. Ein ähnlicher Effekt kann erreicht werden, wenn ein zweiter Polarisator dem zweiten Detektor zugeordnet ist, dessen Polarisationsrichtung im Wesentlichen senkrecht zu der ersten Polarisationsrichtung des ersten Polarisationsfilters ausgerichtet ist. Der zweite Polarisationsfilter kann zusätzlich zu dem Lichtquellenpolarisator verwendet werden.

Die Verwendung mindestens zweier voneinander verschiedener Wellenlängen erlaubt es, den Sensor in spektraler Weise zu betreiben. Durch die Verwendung von Wellenlängen, welche z.B. von Eis oder Wasser besonders gut absorbiert werden, können Eis bzw. Wasser auf der Fahrbahn erkannt werden, wenn das reflektierte Licht dieser bestimmten Wellenlängen mit einer Referenzwellenlänge verglichen wird. Es ist somit möglich, die Prinzipien der Spektralanalyse und der Diffus- und Spiegelndreflexion in nur einem Gerät, bzw. einem einzigen Gehäuse auszuführen. Dafür sind die Lichtquelleneinheiten mit allen Lichtquellen und alle dafür erforderlichen Detektoren, z. B. der erste und der zweite Detektor, platzsparend in einem Gehäuse untergebracht, was auch die Montage und Wartung vereinfacht. Es kann Licht in zumindest drei voneinander verschiedenen Wellenlängen im Infrarotbereich verwendet werden. Die Lichtquelleneinheit kann dazu mehrere Lichtquellen umfassen. Z.B. kann die Lichtquelleneinheit dazu ausgelegt sein, Infrarotlicht der Wellenlängen 1300 nm, 1460 nm und 1550 nm auszusenden. Während Licht der Wellenlänge 1460 nm besonders gut von Wasser absorbiert wird, wird Licht der Wellenlänge 1550 nm gut von Eis absorbiert. Licht im Bereich von ungefähr 1300 nm kann dann als Referenzwellenlänge verwendet werden. Es können jedoch auch andere Wellenlängen verwendet werden. Insbesondere als Referenzwellenlänge kann jede andere Wellenlänge verwendet werden, welche weder von Eis noch Wasser nennenswert absorbiert wird. Als wassersensitive Wellenlänge kann auch jede andere Wellenlänge verwendet werden, welche in Wasser erhöht absorbiert wird. Genauso kann als eissensitive Wellenlänge jede Wellenlänge gewählt werden, welche in Eis erhöht absorbiert wird. Andere interessante Wellenlängen umfassen z.B. 1190, 1040, 970, 880 und 810 nm im Infrarotbereich, sowie die sichtbaren Wellenlängen 625, 530 und 470 nm.

Die Lichtquelleneinheit kann dazu ausgelegt sein, Licht genau drei verschiedener Wellenlängen auszusenden. Dazu kann die Lichtquelleneinheit drei Lichtquellen, eine Lichtquelle für jede Wellenlänge aufweisen. Es werden nur die drei Wellenlängen verwendet, um sowohl spektral als auch spiegelnd/diffus reflektiertes Licht zu erfassen, um sowohl die Fahrbahnbeschaffenheit als auch die Art der Fahrbahn zu ermitteln bzw. zu erkennen. Jede der Lichtquellen kann einzeln ansteuerbar und unabhängig von den anderen an- und abschaltbar sein bzw. in der Intensität regulierbar sein.

Darüber hinaus können auch mehr als die oben genannten zwei oder drei voneinander verschiedenen Wellenlängen verwendet werden. Beispielsweise kann die Wellenlänge 625 nm auch zusätzlich zur Messung des diffus und des spiegelnd reflektierten Lichts verwendet werden.

Es kann weiterhin vorgesehen sein, das ausgesendete Licht in der Intensität bzw. Amplitude zu modulieren. Das Modulieren der Intensität bzw. Amplitude kann durch An- und Ausschalten aller oder einzelner Lichtquellen der Lichtquelleneinheit erfolgen. Das Modulieren der Intensität bzw. das An- und Abschalten kann für jede Wellenlänge der Lichtquelleneinheit oder für jede Lichtquelle der Lichtquelleneinheit separat erfolgen. Beispielsweise kann das Modulieren der Intensität bzw. das An- und Abschalten für jede Wellenlänge mit der gleichen Frequenz, jedoch phasenverschoben und/oder mit unterschiedlichen Frequenzen erfolgen. Dadurch kann beispielsweise erreicht werden, dass das Licht unterschiedlicher Wellenlängen zeitlich versetzt oder sequentiell ausgesandt wird. Z.B. kann vorgesehen sein, Licht einer ersten Wellenlänge für ein bestimmtes Zeitintervall auszusenden, dann das Licht der ersten Wellenlänge abzuschalten und eine zweite Wellenlänge einzuschalten usw.. In den Detektoren wird dann jeweils Licht von nur einer Wellenlänge detektiert. Dadurch kann eine spektrale Analyse oder Aufspaltung des einfallenden Lichts an den Detektoren vermieden werden. Es sind auch Mischformen verschiedener Modulationstechniken anwendbar, insbesondere frequenz- und amplitudenmodulierte optische Signalzüge mit oder ohne Unterbrechungen.

Die vorliegende Erfindung erlaubt es daher auch, einfache Detektoren als ersten oder zweiten Detektor zu verwenden. Beispielsweise können Photodioden verwendet werden. Der erste Detektor und der zweite Detektor können jeweils eine oder mehrere Photodioden umfassen. Zumindest der erste Detektor kann dazu ausgelegt sein, Licht aller von der Lichtquelleneinheit ausgesendeten Wellenlängen zu erfassen. Der Detektor kann auch alternativ oder ergänzend einen optoelektrischen Chip (z.B. CCD) oder eine andere optische Aufnahmeeinrichtung umfassen.

Der erste und der zweite Detektor können zur Erfassung bzw. zur Ermittlung von spiegelnd reflektiertem und diffus reflektiertem Licht verwendet werden. Zudem kann zumindest einer aus dem ersten und dem zweiten Detektor auch für die spektrale Ermittlung verwendet werden. Zumindest dieser Detektor ist dann dazu ausgelegt, Licht mehrerer Wellenlängen zu detektieren. In diesem Beispiel verfügt der Sensor über genau den ersten Detektor und den zweiten Detektor und es sind keine weiteren Detektoren vorgesehen.

Der Sensor kann dazu ausgelegt sein, in einem Abstand von 10 cm bis 100 cm von der Fahrbahnoberfläche an einem Fahrzeug oder stationär angeordnet zu werden. Insbesondere kann die der Lichtquelleneinheit zugeordnete Emitteroptik die Fokussiereinrichtung so ausgelegt sein, dass an einer sich im Abstand von 10 cm bis 100 cm von dem Sensor befindenden Fahrbahnoberfläche diffus und spiegelnd reflektiertes Licht in dem ersten Detektor und dem zweiten Detektor detektiert wird. Durch den breiten Abstandbereich kann der Sensor leicht an unterschiedlichen Fahrzeugen angebracht werden kann. Die Anbringung ist somit auch in der Nachrüstung einfach und unkompliziert.

Der Sensor kann auch eine Auswerteinrichtung zur Auswertung bzw. Verarbeitung von mittels des ersten Detektors und zumindest mittels des zweiten Detektors ermittelten Daten umfassen. Die Auswerteinrichtung kann innerhalb des Gehäuses angeordnet sein oder in das Gehäuse integriert sein. Dadurch ergibt sich eine besonders kompakte Ausführung und eine einfache Montage des Sensors. Die Auswerteinrichtung kann jedoch auch als separates Element außerhalb des Sensors vorgesehen sein und mit dem Sensor beispielsweise über eine Kabelverbindung oder eine drahtlose Verbindung verbunden sein.

Die Auswerteinrichtung kann auch eine Steuereinrichtung für die Lichtquellen der Lichtquelleneinheit umfassen.

### Figurenbeschreibung

Im Folgenden werden weitere Einzelheiten und Beispiele der Erfindung lediglich beispielhaft und nicht einschränkend mit Bezug auf die beiliegenden Figuren angegeben, welche zeigen:
Figur 1 zeigt ein Beispiel eines Sensors zur Erkennung eines Fahrbahnzustands mit hinter einer Sammellinse angeordneter Lichtquelle;
Figur 2 zeigt einen Sensor mit in einer Bohrung einer Sammellinse angeordneter Lichtquelle;
Figur 3 zeigt einen Sensor mit vor der Sammellinse angeordneter Lichtquelle;
Figur 4 zeigt einen Sensor mit Parabolspiegel; und
Figur 5 zeigt beispielhaft, wie ein Sensor an einem Fahrzeug angeordnet werden kann.

### Detaillierte Beschreibung eines Beispiels der Erfindung

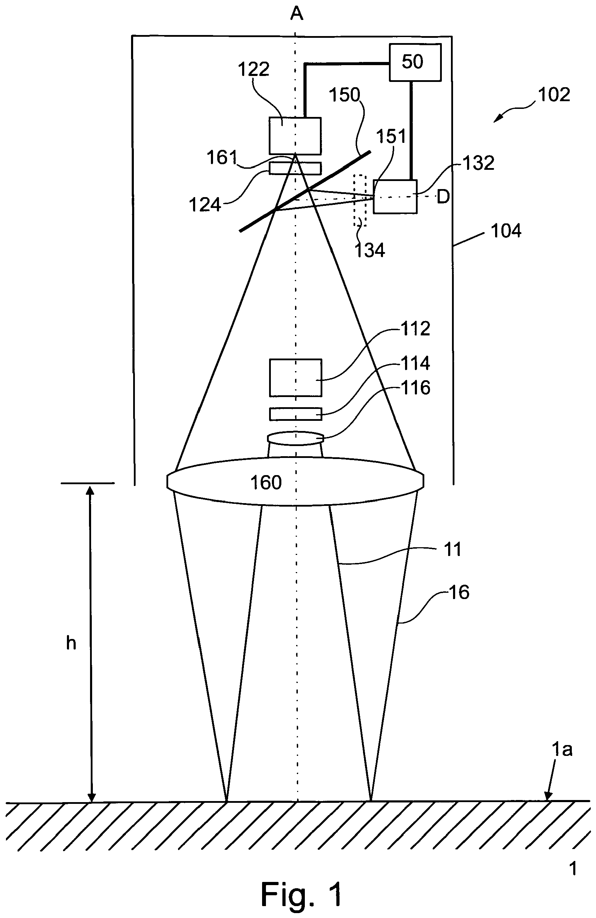

Figur 1 zeigt schematisch ein erstes Beispiel eines Aufbaus eines Sensors 102 zur Erkennung der Beschaffenheit, insbesondere der Art und des Zustandes einer Fahrbahn 1, insbesondere der Oberfläche 1a der Fahrbahn 1. Der Sensor 102 ist zur Anbringung an einem Kraftfahrzeug ausgelegt.

Der in der Figur 1 dargestellte Sensor 102 umfasst eine Fokussiereinrichtung in Form einer Sammeloptik, welche von einer Fahrbahn 1 reflektiertes Licht 16 fokussiert. In der Figur 1 ist die Sammeloptik beispielhaft als einzelne Sammellinse 160 dargestellt, die Sammeloptik kann jedoch weitere Linsen und/oder andere optische Elemente umfassen. Das reflektierte Licht 16 kann spiegelnd reflektiertes Licht und/oder diffus reflektiertes Licht umfassen. Die Sammellinse 160 verfügt über eine optische Achse A, welche im Wesentlichen senkrecht zur Fahrbahn 1 ausgerichtet sein kann, wenn der Sensor 102 an einem Fahrzeug angebracht ist. Der Sensor 102 ist so ausgerichtet, dass der ausgesendete Lichtstrahl 11 ungefähr senkrecht auf die Fahrbahn 1 bzw. Fahrbahnoberfläche 1a fällt.

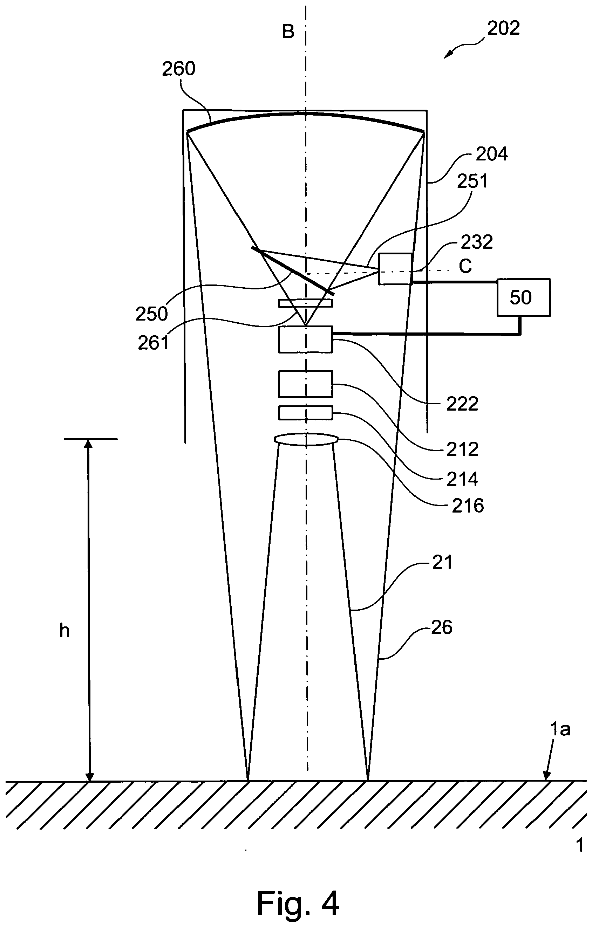

Im Brennpunkt oder Fokus 161 der Sammellinse 160 ist ein erster Detektor 122 angeordnet, welcher beispielsweise eine oder mehrere nicht dargestellte Fotodioden umfasst. Des Weiteren befindet sich in dem Lichtstrahl des reflektierten Lichts 16 zwischen der Sammellinse 160 und dem Brennpunkt oder Fokus 161 der Sammellinse 160 ein Strahlteiler 150, welcher dazu ausgelegt ist, einen Teil des in der Sammellinse 160 gesammelten und auf den Brennpunkt 161 fokussierten Lichtes durchzulassen und den anderen Teil in einem Winkel von beispielsweise ungefähr 90° entlang einer Reflexionsachse D zu reflektieren. Das reflektierte Licht 16 wird dann je nach Anordnung des Strahlteilers 150 auf einen zweiten Brennpunkt 151 auf der Reflexionsachse D außerhalb der optischen Achse A fokussiert. Die Lage der Reflexionsachse D wird durch die Anordnung und Ausrichtung des Strahlteilers 150 bestimmt und kann ein anderer als der in Figur 4 dargestellte Winkel von 90° sein. An oder in der Nähe dieses zweiten Brennpunkts 151 kann ein zweiter Detektor 132 angeordnet sein.

Dem ersten Detektor 122 kann ein erster Polarisationsfilter 124 und/oder dem zweiten Detektor 132 kann ein zweiter Polarisationsfilter 134 zugeordnet sein. Im in der Figur 1 dargestellten Beispiel ist nur an dem ersten Detektor 122 ein erster Polarisationsfilter 124 so auf der optischen Achse A angeordnet, dass nur in der ersten Polarisationsrichtung des ersten Polarisationsfilters 124 ausgerichtetes Licht auf den ersten Detektor 122 fällt. Es kann jedoch optional vorgesehen sein, einen zweiten Polarisationsfilter 134 oder einen anderen Filter alternativ oder zusätzlich vor dem zweiten Detektor 132 anzuordnen.

Der erste Detektor 122 und der zweite Detektor 132 können baugleiche Fotodioden umfassen oder können unterschiedlich aufgebaut sein, beispielsweise mit unterschiedlichen Empfindlichkeiten für unterschiedliche Wellenlängen. Neben dem ersten Polarisationsfilter 124 bzw. dem zweiten Polarisationsfilter 134 können auch andere Filter oder weitere optische Elemente dem ersten Detektor 122 und/oder dem zweiten Detektor 132 zugeordnet sein. Beispielsweise können Farbfilter verwendet werden, welche nur Licht bestimmter Wellenlängen oder bestimmter Wellenlängenbereiche zu dem ersten Detektor bzw. dem zweiten Detektor durchlassen.

Auch kann der Strahlteiler 150 als dichroischer Spiegel ausgelegt sein und einen bestimmten Wellenlängenbereich reflektieren, während ein anderer Wellenlängenbereich transmittiert beziehungsweise durchgelassen wird.

Der Sensor 102 umfasst ferner eine Lichtquelleneinheit 112, welche eine oder mehrere nicht dargestellte Leuchtdioden (LED), Laserdioden oder andere geeignete Lichtquellen oder eine Kombination daraus umfasst. Die Lichtquelleneinheit 112 kann dazu ausgelegt sein, Licht einer oder mehrerer Wellenlängen oder Wellenlängenbereiche auszusenden.

Der Lichtquelleneinheit 112 ist ein Lichtquellenpolarisationsfilter 114 und eine Emitteroptik zugeordnet, so dass von der Lichtquelleneinheit 112 emittiertes Licht vom Lichtquellenpolarisationsfilter 114 polarisiert und mittels der Emitteroptik zu einem emittierten Lichtstrahl 11 gebündelt wird. In der Figur 1 ist die Emitteroptik beispielhaft als einzelne Emitterlinse 116 dargestellt. Die Emitteroptik kann jedoch weitere Linsen und/oder andere optische Elemente umfassen. Die Lichtquelle 112, der Polarisationsfilter 114 und die Emitterlinse 116 sind im dargestellten Beispiel auf der optischen Achse A angeordnet.

In dem in der Figur 1 dargestellten Beispiel sind die Lichtquelle 112, der Polarisationsfilter 114 und die Emitterlinse 116 zwischen der Sammellinse 160 und dem Strahlteiler 150, also bezüglich der Sammellinse 160 im Sensor 102 innenliegend, angeordnet. Der von der Lichtquelleneinheit 112 ausgesandte Lichtstrahl 11 wird somit zunächst im Lichtquellenpolarisationsfilter 114 in eine vorbestimmte Richtung polarisiert und dann durch die Emitterlinse 116 und nachfolgend durch die Sammellinse 160 auf die Fahrbahn 1 bzw. Fahrbahnoberfläche 1a ausgerichtet. Die Kombination der Emitterlinse 116 und der Sammellinse 160 kann dabei so abgestimmt sein, dass ein vorbestimmter Bereich auf der Fahrbahn 1 ausgeleuchtet wird.

Die Polarisationsrichtung des Lichtquellenpolarisationsfilters 114 kann im Wesentlichen senkrecht zur Polarisationsrichtung des ersten Polarisationsfilters 124 ausgerichtet sein. Dadurch wird von der Fahrbahnoberfläche 1a spiegelnd reflektiertes Licht durch den ersten Polarisationsfilter 124 herausgefiltert, und der erste Detektor 122 detektiert lediglich diffus reflektiertes Licht. Der zweite Detektor 132 verfügt dahingegen im dargestellten Beispiel über keinen Polarisationsfilter und detektiert sowohl spiegelnd als auch diffus reflektiertes Licht. Es kann jedoch ein zweiter Polarisationsfilter 134 optional vorgesehen sein, welcher zu der Polarisationsrichtung des Lichtquellenpolarisators 114 parallel ausgerichtet ist, so dass mit dem zweiten Detektor 132 hauptsächlich spiegelnd reflektiertes Licht detektiert werden kann.

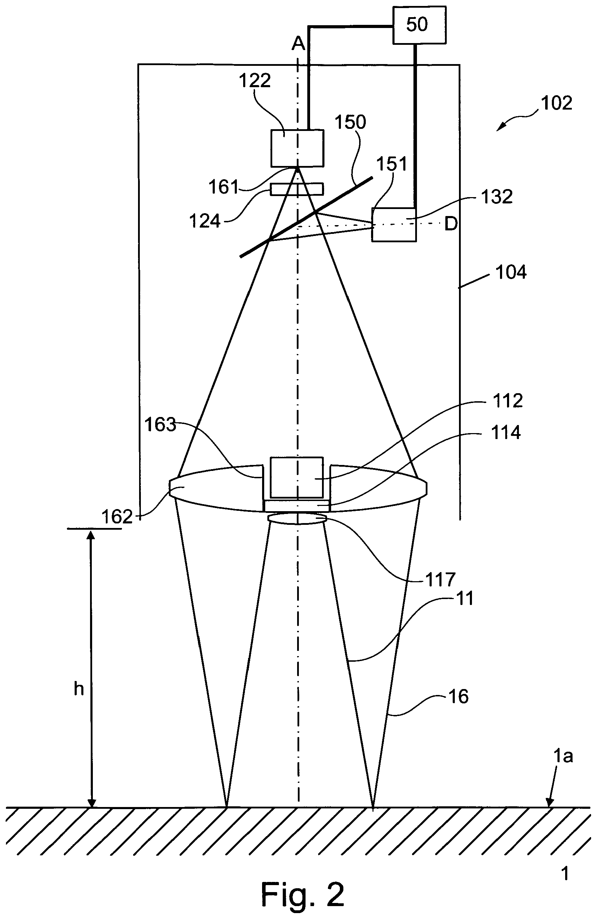

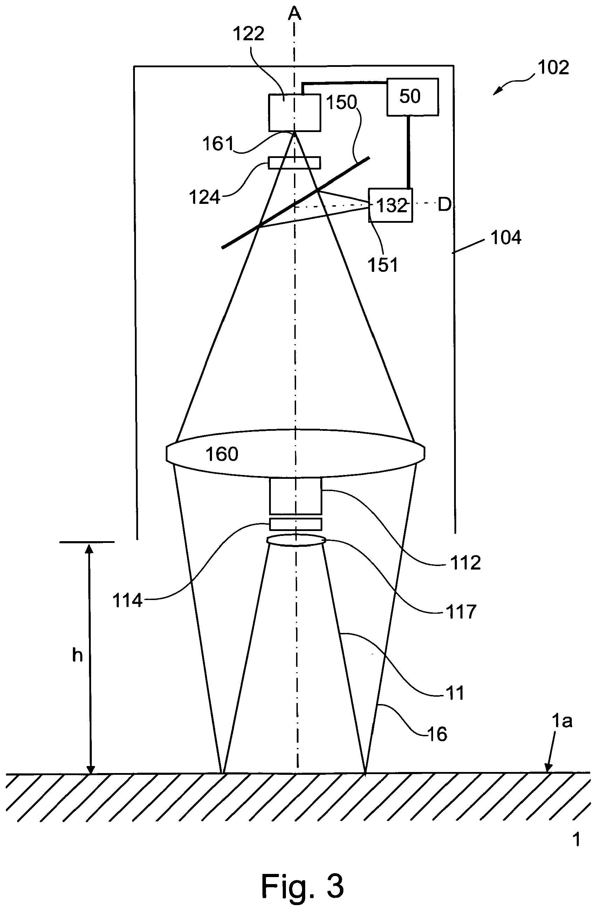

Der Sensor 102 verfügt ferner über eine Auswerteinrichtung 50, mit welcher die von dem ersten Detektor 122 und dem zweiten Detektor 132 erfassten bzw. ermittelten Daten verarbeitet werden. Die Auswerteinrichtung 50 kann mit dem ersten Detektor 122 und dem zweiten Detektor 132 über ein Kabel oder eine drahtlose Verbindung verbunden sein. Die Auswerteinrichtung kann auch eine Steuerung für die Lichtquelleneinheit 121 umfassen oder mit einer Steuerung verbunden sein. Die Auswerteinheit 50 und/oder die Steuerung können jedoch an oder in dem Gehäuse 4 angeordnet sein bzw. in das Gehäuse 104 integriert sein, wie mit Bezug auf die Figuren 1 und 3 dargestellt. Die Auswerteinrichtung 50 kann jedoch auch außerhalb des Gehäuses 104 angeordnet sein, wie in der Figur 2 dargestellt, und kann sich beispielsweise an einem anderen Ort in dem Fahrzeug 60 befinden.

Anstatt den von der Lichtquelleneinheit 112 emittierten Lichtstrahl 11 durch die Sammellinse 160 zu leiten, kann die Sammellinse 162 auch eine Öffnung 163, beispielsweise in der Form einer Bohrung, insbesondere in Form einer Durchgangsbohrung aufweisen, durch welche das dann nur noch durch die Emitterlinse 117 beeinflusste Licht auf die Fahrbahn 1 geleitet werden kann. Eine solche Linse 162 mit zentraler Öffnung 163 ist als Sammellinse 162 mit Öffnung 163 beispielhaft in der Figur 2 dargestellt. Da der ausgesandte Lichtstrahl 11 hier nicht durch die Sammellinse 162 beeinflusst wird, ist die Emitteroptik, bzw. die Emitterlinse 117 entsprechend angepasst.

Darüber hinaus sind in der Figur 2 die Lichtquelleneinheit 112, der Lichtquellenpolarisationsfilter 114 und die Emitterlinse 117 in oder an der Durchgangsbohrung der Sammellinse 162 mit Durchgangsbohrung angeordnet. Die zentrale Bohrung 163 der Sammellinse mit Bohrung 162 kann beispielsweise als Kreisbohrung zentriert auf der optischen Achse A ausgeführt sein.

Die weiteren Einrichtungen wie der erste Detektor 122, der zweite Detektor 132, der Strahlteiler 150 und alle weiteren hier nicht speziell erwähnten Elemente können zudem in der Figur 1 und in Bezug auf das in der Figur 1 beschriebene Beispiel baugleich oder identisch ausgeführt sein.

Die Figur 3 zeigt ein weiteres Ausführungsbeispiel der vorliegenden Erfindung, bei welchem die Lichtemittereinrichtung , bestehend aus der Lichtquelleneinheit 112, dem Lichtquellenpolarisator 114 und der Emitterlinse 117, vor der Sammellinse 160 auf der optischen Achse A der Sammellinse 160 angeordnet ist. Der Begriff "vor" bezieht sich dabei auf die Anordnung der Lichtemittereinrichtung am Sensor 102 relativ zur Sammellinse 160. In dieser Ausführung befindet sich die Emittereinrichtung auf der dem Strahlteiler 150, dem ersten Detektor 122 und dem zweiten Detektor 132 gegenüberliegenden Seite der Sammellinse 160. Bei dieser Ausführung kann auf eine Öffnung in der Sammellinse 160 verzichtet werden.

Alle weiteren Bauelemente können den in der Figur 1 beziehungsweise in der Figur 2 entsprechen oder zu diesen identisch sein, wobei der Fachmann die Brennweiten und optischen Eigenschaften der Sammellinse 160 und der Emitterlinse 117 an die veränderte Geometrie anpassen wird.

Darüber hinaus kann vorgesehen sein, dass sämtliche Einrichtungen und Elemente der in den Figuren 1 bis 3 dargestellten Sensoren 102 in einem einzigen Gehäuse 104 aufgenommen sind. Insbesondere kann auch die Auswerteinrichtung 50, in dem Gehäuse 104 angeordnet sein oder in das Gehäuse 104 integriert sein, wie schematisch in den Figuren 1 und 3 dargestellt

Ein weiteres Ausführungsbeispiel eines Sensors 202 zur Fahrbahnart- und -zustandserkennung ist in der Figur 4 dargestellt. Der Sensor 202 verfügt über eine Fokussiereinrichtung in Form eines Parabolspiegels 260, welcher im hinteren Bereich eines Sensorgehäuses 204 angeordnet ist. Der Parabolspiegel 260 verfügt über eine optische Achse B und ist so angeordnet, dass der entlang der optischen Achse B einfallende von der Fahrbahnoberfläche 1a reflektierte Lichtstrahl 26 auf einen ebenfalls auf der optischen Achse B befindlichen Brennpunkt 261 des Parabolspiegels 260 fokussiert wird. Je nach Ausrichtung des Parabolspiegels 260, kann sich dieser Brennpunkt 261 des Parabolspiegels 260 im Zentrum des einfallenden reflektierten Lichtstrahles 26 befinden, wie beispielhaft in der Figur 4 dargestellt. Im Brennpunkt 261 des Parabolspiegels 260 kann der erste Detektor 222 angeordnet sein. Ein Strahlteiler 250, welcher im Wesentlichen dem Strahlteiler 150 der Figuren 1 bis 3 entsprechen kann, kann zwischen dem Parabolspiegel 260 und dem Brennpunkt des Parabolspiegels 261 beziehungsweise dem ersten Detektor 222 angeordnet sein und einen Teil des durch den Parabolspiegel 260 reflektierten beziehungsweise fokussierten Lichts in eine Richtung im Wesentlichen ungefähr 90° entlang einer Reflexionsachse C auf einen zweiten Detektor 232 fokussieren. Der zweite Detektor 232 befindet sich dann außerhalb der optischen Achse B. Die Lage der Reflexionsachse C wird durch die Anordnung und Ausrichtung des Strahlteilers 250 bestimmt und kann ein anderer als der in der Figur 4 dargestellte 90° Winkel sein.

Ferner kann ein erster Polarisator oder erster Polarisationsfilter dem ersten Detektor 222 zugeordnet sein. Entsprechend kann zusätzlich oder alternativ ein zweiter Polarisator oder zweiter Polarisationsfilter 234 dem zweiten Detektor 232 zugeordnet sein (gestrichelt dargestellt). Der erste Polarisationsfilter und der optionale zweite Polarisationsfilter 234 können dem ersten Polarisationsfilter 124 bzw. dem zweiten Polarisationsfilter 134 der Figuren 1 bis 3 mit deren Polarisationsrichtung entsprechen. Der erste Polarisationsfilter vor dem ersten Detektor 222 kann dazu dienen, spiegelnd reflektiertes Licht herauszufiltern, so dass dieses nur mit dem zweiten Detektor 232 detektiert wird.

Auf der optischen Achse B ist ebenfalls eine Lichtemittereinrichtung bestehend aus einer Lichtquelleneinheit 212, einem Lichtquellenpolarisator 214 und einer Emitteroptik, beispielhaft dargestellt als einzelne Emitterlinse 216, angeordnet. Die Emittereinrichtung ist so ausgelegt, dass die optische Achse einer Emitterlinse 216 der optischen Achse B des Parabolspiegels 260 entspricht oder mit dieser zumindest teilweise überlagert ist. Die Lichtemittereinrichtung kann innerhalb eines Sensorgehäuses 204 angeordnet sein. Das Funktionsprinzip entspricht dabei dem der Figuren 1 bis 3, wobei jedoch die Sammellinse 160 beziehungsweise 162 durch den Parabolspiegel 260 als Fokussiereinrichtung ersetzt ist, und die optischen Wege entsprechend angepasst sind.

Die beschriebenen Sensoren 102, 202 können im sichtbaren Lichtbereich, beispielsweise bei einer Wellenlänge von ungefähr 625 nm betrieben werden, um spiegelnd reflektiertes Licht und diffus reflektiertes Licht zu messen. Aus dem Verhältnis von dem im ersten Detektor gemessenen diffus reflektierten Licht zu dem im zweiten Detektor zusätzlich gemessenen spiegelnd reflektierten Licht kann auf die Fahrbahnhelligkeit und Fahrbahnrauhigkeit geschlossen werden und damit bestimmt werden, ob sich das Fahrzeug beispielsweise auf einer Asphalt- oder Betonfahrbahn befindet.

Die beschriebenen Sensoren 102, 202 können auch im Infrarotbereich bei verschiedenen Wellenlängen verwendet werden. Hierzu kann der erste Detektor und/oder der zweite Detektor verwendet werden. Beispielsweise wird Infrarotlicht der Wellenlänge 1460 nm besonders gut von Wasser absorbiert, so dass Licht dieser Wellenlänge bei nasser Fahrbahn nur in geringem Maße zu dem ersten Detektor bzw. dem zweiten Detektor zurückreflektiert wird. Bei trockener Fahrbahn wird diese Wellenlänge dahingegen normal reflektiert. Infrarotlicht der Wellenlänge 1550 nm wird dahingegen gut von Eis absorbiert. Durch Vergleich der Reflexion dieser beiden Wellenlängen und Berücksichtigung einer Referenzwellenlänge kann auf Eis oder Wasser auf der Fahrbahn geschlossen werden. Die Referenzwellenlänge, welche weder von Eis noch von Wasser nennenswert absorbiert wird, z.B. 1300 nm, dient als Bezugsgröße zur Bewertung des Absorptionsgrades der beiden anderen Wellenlängen. Dann können die gemessenen Intensitätsverhältnisse bei den Wellenlängen 1550 nm/1300 nm mit dem Verhältnis 1460 nm/1300 nm in bekannter Weise in Relation gesetzt werden, um Informationen über Wasser und Eis auf der Fahrbahn oder eine trockene Fahrbahn zu erlangen.

Die verschiedenen Wellenlängen können parallel, insbesondere aber sequentiell zeitlich versetzt ausgesandt werden. Somit wird jeweils nur Licht einer Wellenlänge zu einem Zeitpunkt ausgesandt und dementsprechend detektiert. Dies erlaubt es, auf eine aufwändige spektrale Analyse oder Strahlaufteilung zu verzichten.

Mit den beschriebenen Sensoren 102, 202 können mit einem kompakten und kostengünstigen Aufbau sowohl spektrale Reflektion als auch spiegelnde und diffuse Reflektion in kurzer zeitlicher Abfolge gemessen und auf dieser Basis auf Fahrbahnart und -zustand geschlossen werden. Dadurch entsteht eine bessere und genauere Information über den tatsächlichen Zustand und die Art der Fahrbahn 1 bzw. Fahrbahnoberfläche 1a unter dem Fahrzeug 60. Für die Messung ist nur ein einziger Sensor 102 oder 202 in einem Sensorgehäuse 104, 204 erforderlich, es können jedoch auch mehrere Sensoren verwendet werden.

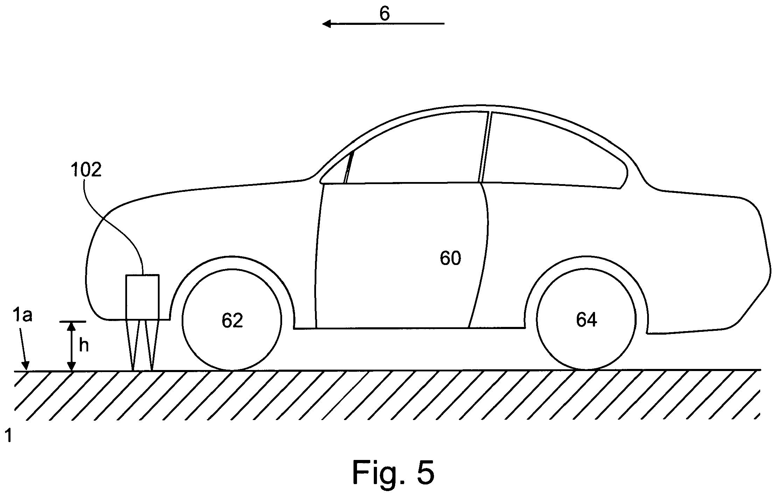

Die Figur 5 zeigt beispielhaft, wie der oben mit Bezug auf die Figuren 1 bis 4 beschriebene Sensor 102, 202 in einem Fahrzeug 60 angeordnet werden kann.

Der Sensor 102, 202 ist dazu ausgelegt, an einem Fahrzeug 60 angeordnet zu sein. Der Sensor 102, 202 ist im dargestellten Beispiel vor dem linken Vorderrad 62 des Fahrzeugs 60 in dessen Spur angeordnet. Der Sensor 102, 202 kann jedoch zusätzlich oder alternativ auch vor dem rechten Vorderrad und/oder einem oder beiden Hinterrädern, z. B. dem linken Hinterrad 64, angeordnet sein, um Informationen über die Art und den Zustand der Fahrbahn 1, bzw. der Fahrbahnoberfläche 1a in den einzelnen Spuren oder vor den Rädern zu erhalten. Der Sensor 102, 202 ist so am Fahrzeug 60 angeordnet, dass der von dem Sensor 102, 202 emittierte Lichtstrahl 11, 21 im Wesentlichen im rechten Winkel auf die Fahrbahnoberfläche 1a trifft. Der in einem Winkel von ungefähr 180° reflektierte Lichtstrahl 16, 26 wird dann in dem Sensor 102, 202 detektiert.

Der Sensor 102, 202 ist dazu ausgelegt, in einer Höhe h bzw. einem Abstand von ungefähr 10 cm bis ungefähr 1 m von der Fahrbahnoberfläche 1a angeordnet zu werden, wobei der Abstand an den jeweiligen Einsatzzweck angepasst sein kann. Für die Verwendung des Sensors 102, 202 in einem Personenkraftwagen kann die Höhe h im Bereich von ungefähr 10 cm bis 40 cm liegen. Bei einer Verwendung des Sensors 102, 202 in einem Nutzfahrzeug kann die Höhe h ungefähr 30 cm bis ungefähr 100 cm betragen, insbesondere in einem Bereich von 50 cm bis 80 cm liegen.

Der Sensor 102, 202 kann jedoch auch an jeder anderen Stelle eines Fahrzeugs 60 angeordnet werden. Ferner kann der Sensor 102, 202 auch dazu ausgelegt sein, nachträglich an einem Fahrzeug 60 angebracht zu werden. Das Fahrzeug 60 kann ein Personenkraftwagen, ein Nutzfahrzeug oder jede andere Art von Fahrzeugen sein.

In der vorangehenden Beschreibung beziehen sich die Begriffe vor, hinter, rechts und links auf die normale Fahrtrichtung 6 des Fahrzeugs 60.

Die vorangehenden Beschreibungen wurden im Hinblick auf die in den Figuren dargestellten Beispiele gegeben. Jedoch wird der Fachmann die angegebenen Beispiele ohne weiteres modifizieren oder kombinieren und beispielsweise um weitere optische Modifikationen, beispielsweise weitere Wellenlängen, ergänzen, um weitere Fahrbahnzustände zu erkennen. Auch wird der Fachmann andere als die angegebenen Wellenlängen in Erwägung ziehen, um die Messergebnisse an unterschiedliche Anforderungen anzupassen.

Es versteht sich, dass die angegebenen Wellenlängen nicht auf genau diese Werte eingeschränkt sind, sondern einen Wellenlängenbereich umfassen können, welcher die angegebenen diskreten Wellenlängen enthält.

## Patentansprüche

1. Sensor (102; 202) zur Ermittlung einer Beschaffenheit einer Fahrbahnoberfläche (1a) für ein Kraftfahrzeug (60), umfassend
- zumindest eine Lichtquelleneinheit (112; 212);
- einen ersten Detektor (122; 222) zum Erfassen von diffus reflektiertem Licht, wobei ein erster Polarisator (124) mit einer ersten Polarisationsrichtung vor dem ersten Detektor (122; 222) angeordnet ist; und
- einen zweiten Detektor (132; 232) zum Erfassen von reflektiertem Licht (16; 26), wobei vor der zumindest einen Lichtquelleneinheit (112; 212) ein Lichtquellenpolarisator (114; 214) angeordnet ist, dessen Polarisationsrichtung senkrecht zu der ersten Polarisationsrichtung des ersten Polarisators (124) ausgerichtet ist, wobei das diffus und das spiegelnd reflektierte Licht (16; 26) über eine gemeinsame Fokussiereinrichtung (160; 162; 260) mit einer optischen Achse (A; B) fokussiert und mit einem Strahlteiler (150; 250) auf den ersten Detektor (122; 222) und den zweiten Detektor (132; 232) aufgeteilt werden und wobei von der zumindest einen Lichtquelleneinheit (112; 212) ausgesendetes Licht (11; 21) mit der optischen Achse (A; B) der Fokussiereinrichtung (160; 162; 260) zumindest teilweise überlagert ist, wobei der Strahlteiler (150; 250) in dem Lichtstrahl des reflektierten Lichts (16; 26) zwischen der Fokussiereinrichtung (160; 162; 260) und dem Brennpunkt (161; 261) der Fokussiereinrichtung (160; 162; 260) angeordnet ist, der erste Detektor (122; 222) im Brennpunkt (161; 261) der Fokussiereinrichtung (160; 162; 260) angeordnet ist; die zumindest eine Lichtquelleneinheit (112; 212), eine der zumindest einen Lichtquelleneinheit (112; 212) zugeordnete Emitterlinse (116, 117; 216), die das ausgesendete Licht (11; 21) bündelt, und der Lichtquellenpolarisator (114, 214) auf der optischen Achse (A; B) der Fokussiereinrichtung (160; 162; 260) angeordnet sind und die zumindest eine Lichtquelleneinheit (112; 212) entlang der optischen Achse (A; B) zwischen dem Strahlteiler (150; 250) und dem Lichtquellenpolarisator (114; 214) angeordnet ist.

2. Sensor (102) nach Anspruch 1, wobei die Fokussiereinrichtung (160; 162) eine Sammeloptik (160; 162) ist.

3. Sensor (102) nach Anspruch 2, wobei die Sammeloptik (162) eine Öffnung (163) aufweist.

4. Sensor (102) nach Anspruch 3, wobei die zumindest eine Lichtquelleneinheit (112) in der Öffnung (163) der Sammeloptik (162) angeordnet ist.

5. Sensor (102) nach Anspruch 3 oder 4, wobei das von der zumindest einen Lichtquelleneinheit (112) ausgesendete Licht (10) zumindest teilweise durch die Öffnung (163) geführt wird.

6. Sensor (102) nach Anspruch 2, wobei die zumindest eine Lichtquelleneinheit (112) auf der dem Strahlteiler (150) gegenüberliegenden Seite der Sammeloptik (160; 162), welche als Sammellinse (160) ausgebildet ist, angeordnet ist.

7. Sensor (102) nach Anspruch 2, wobei die zumindest eine Lichtquelleneinheit (112) auf der gleichen Seite der Sammeloptik (160; 162), welche als Sammellinse (160) ausgebildet ist, angeordnet ist, auf der sich auch der Strahlteiler (150) befindet.

8. Sensor (102) nach Anspruch 1, **dadurch gekennzeichnet, dass** vor dem zweiten Detektor (132; 232) ein zweiter Polarisator (134; 234) angeordnet ist, dessen Polarisationsrichtung senkrecht zu der ersten Polarisationsrichtung des ersten Polarisators (124; 224) ausgerichtet ist.

9. Sensor (202) nach Anspruch 1, wobei die Fokussiereinrichtung ein Parabolspiegel (260) ist.

10. Sensor (202) nach Anspruch 9, wobei der erste Detektor (222) oder der zweite Detektor (232) im Wesentlichen im Bereich des Brennpunkts (261) des Parabolspiegels (260) angeordnet ist.

11. Sensor (102; 202) nach einem der vorangehenden Ansprüche, wobei die Lichtquelleneinheit (112; 212) drei Lichtquellen zur Aussendung von Licht mit drei unterschiedlichen Wellenlängen umfasst.

12. Sensor (102; 202) nach einem der vorangehenden Ansprüche, welcher den ersten Detektor (22) und den zweiten Detektor (32) als einzige Detektoren aufweist, wobei der Sensor (102; 202) zur Ermittlung sowohl von Wasser und Eis auf der Fahrbahnoberfläche (1a) als auch zur Ermittlung der Art der Fahrbahnoberfläche (1a) geeignet ist.

13. Sensor (102; 202) nach einem der vorangehenden Ansprüche, zudem umfassend eine Auswerteinrichtung (50) zur Auswertung von mittels des ersten Detektors (122; 222) und zumindest mittels des zweiten Detektors (132; 232) ermittelten Daten.

14. Sensor (102; 202) nach Anspruch 13, wobei die Auswerteinrichtung (50) in einem Gehäuse (4) angeordnet ist.

15. Verwendung eines Sensors (102; 202) nach einem der vorangehenden Ansprüche in einem Fahrzeug (60), **dadurch gekennzeichnet, dass** der Sensor (102; 202) in Fahrtrichtung (6) vor einem Rad (62, 64) in dessen Spur an dem Fahrzeug (60) angeordnet ist.

16. Verwendung eines Sensors (102; 202) nach Anspruch 15, **dadurch gekennzeichnet, dass** der Sensor (102; 202) in einer Höhe von 10 cm bis 100 cm über der Fahrbahnoberfläche (1a) angeordnet ist.

## Claims

1. Sensor (102; 202) for ascertaining a condition of a roadway surface (1a) for a motor vehicle (60), said sensor comprising
- at least one light source unit (112; 212);
- a first detector (122; 222) for detecting diffusely reflected light, wherein a first polarizer (124) with a first polarization direction is disposed upstream of the first detector (122; 222); and
- a second detector (132; 232) for detecting reflected light (16; 26),
wherein a light source polarizer (114; 214) is disposed upstream of the at least one light source unit (112; 212), the polarization direction of said light source polarizer being aligned perpendicular to the first polarization direction of the first polarizer (124),
wherein the diffusely and specularly reflected light (16; 26) is focused by way of a common focusing device (160; 162; 260) with an optical axis (A; B) and split by means of a beam splitter (150; 250) to the first detector (122; 222) and the second detector (132; 232) and wherein light (11; 21) emitted by the at least one light source unit (112; 212) is at least partly superposed with the optical axis (A; B) of the focusing device (160; 162; 260), wherein
the beam splitter (150; 250) is disposed in the light beam of the reflected light (16; 26) between the focusing device (160; 162; 260) and the focus (161; 261) of the focusing device (160; 162; 260), the first detector (122; 222) is disposed in the focus (161; 261) of the focusing device (160; 162; 260); the at least one light source unit (112; 212), an emitter lens (116, 117; 216), which focuses the emitted light (11; 21) and which is associated with the at least one light source unit (112; 212), and the light source polarizer (114, 214) are disposed on the optical axis (A; B) of the focusing device (160; 162; 260) and the at least one light source unit (112; 212) is disposed along the optical axis (A; B) between the beam splitter (150; 250) and the light source polarizer (114; 214).

2. Sensor (102) according to Claim 1, wherein the focusing device (160; 162) is a converging optical unit (160; 162).

3. Sensor (102) according to Claim 2, wherein the converging optical unit (162) has an aperture (163) .

4. Sensor (102) according to Claim 3, wherein the at least one light source unit (112) is disposed in the aperture (163) of the converging optical unit (162) .

5. Sensor (102) according to Claim 3 or 4, wherein the light (10) emitted by the at least one light source unit (112) is at least partly guided through the aperture (163).

6. Sensor (102) according to Claim 2, wherein the at least one light source unit (112) is disposed on the side of the converging optical unit (160; 162), which is embodied as a converging lens (160), lying opposite the beam splitter (150).

7. Sensor (102) according to Claim 2, wherein the at least one light source unit (112) is disposed on the same side of the converging optical unit (160; 162), which is embodied as a converging lens (160), on which the beam splitter (150) is also situated.

8. Sensor (102) according to Claim 1, **characterized in that** a second polarizer (134; 234) is disposed upstream of the second detector (132; 232), the polarization direction of said second polarizer being aligned perpendicular to the first polarization direction of the first polarizer (124; 224).

9. Sensor (202) according to Claim 1, wherein the focusing device is a parabolic mirror (260).

10. Sensor (202) according to Claim 9, wherein the first detector (222) or the second detector (232) is substantially disposed in the region of the focus (261) of the parabolic mirror (260).

11. Sensor (102; 202) according to any one of the preceding claims, wherein the light source unit (112; 212) comprises three light sources for emitting light at three different wavelengths.

12. Sensor (102; 202) according to any one of the preceding claims, said sensor comprising the first detector (22) and the second detector (32) as only detectors, wherein the sensor (102; 202) is suitable for ascertaining both water and ice on the roadway surface (1a) and also for ascertaining the type of roadway surface (1a).

13. Sensor (102; 202) according to any one of the preceding claims, moreover comprising an evaluation device (50) for evaluating data ascertained by means of the first detector (122; 222) and at least by means of the second detector (132; 232).

14. Sensor (102; 202) according to Claim 13, wherein the evaluation device (50) is disposed in a housing (4).

15. Use of a sensor (102; 202) according to any one of the preceding claims in a vehicle (60), **characterized in that** the sensor (102; 202) is disposed on the vehicle (60), in front of the wheel (62, 64) in the direction of travel (6) and in the track thereof.

16. Use of a sensor (102; 202) according to Claim 15, **characterized in that** the sensor (102; 202) is disposed at a height of 10 cm to 100 cm over the roadway surface (1a).

## Revendications

1. Capteur (102 ; 202) pour la détection des conditions d'une surface de chaussée (1a) pour un véhicule automobile (60), comprenant :
- au moins une unité de source lumineuse (112 ; 212) ;
- un premier détecteur (122 ; 222) pour la détection de lumière réfléchie diffuse, un premier polarisateur (124) équipé d'une première direction de polarisation étant disposé avant le premier détecteur (122 ; 222) ; et
- un deuxième détecteur (132 ; 232) pour la détection de lumière réfléchie (16 ; 26) ;
un polarisateur de source lumineuse (114 ; 214) étant disposé avant l'au moins une unité de source lumineuse (112 ; 212), la direction de polarisation dudit polarisateur est orientée perpendiculairement à la première direction de polarisation du premier polarisateur (124) ;
la lumière réfléchie (16 ; 26) diffuse et se réfléchissant étant focalisée avec un axe optique (A ; B) via un dispositif de focalisation commun (160 ; 162 ; 260) et étant répartie, avec un diviseur de faisceaux (150 ; 250), sur le premier détecteur (122 ; 222) et le deuxième détecteur (132 ; 232) et la lumière (11 ; 21) émise par l'au moins une unité de source lumineuse (112 ; 212) étant au moins en partie superposée avec l'axe optique (A ; B) du dispositif de focalisation (160 ; 162 ; 260) ;
le diviseur de faisceaux (150 ; 250) étant disposé dans le faisceau lumineux de la lumière réfléchie (16 ; 26) entre le dispositif de focalisation (160 ; 162 ; 260) et le point focal (161 ; 261) du dispositif de focalisation (160 ; 162 ; 260), le premier détecteur (122 ; 222) étant disposé dans le point focal (161 ; 261) du dispositif de focalisation (160 ; 162 ; 260) ; l'au moins une unité de source lumineuse (112 ; 212), une lentille émettrice (116, 117 ; 216) associée à l'au moins une unité de source lumineuse (112 ; 212) qui concentre la lumière (11 ; 21) émise et le polarisateur de source lumineuse (114, 214) sont disposés sur l'axe optique (A ; B) du dispositif de focalisation (160 ; 162 ; 260) et l'au moins une unité de source lumineuse (112 ; 212) étant disposée le long de l'axe optique (A ; B) entre le diviseur de faisceaux (150 ; 250) et le polarisateur de source lumineuse (114 ; 214).

2. Capteur (102) selon la revendication 1, le dispositif de focalisation (160 ; 162) étant un système optique de collecte (160 ; 162).

3. Capteur (102) selon la revendication 2, le système optique de collecte (162) comportant une ouverture (163) .

4. Capteur (102) selon la revendication 3, l'au moins une unité de source lumineuse (112) étant disposée dans l'ouverture (163) du système optique de collecte (162).

5. Capteur (102) selon la revendication 3 ou 4, la lumière (10) émise par l'au moins une unité de source lumineuse (112) étant guidée au moins en partie à travers l'ouverture (163).

6. Capteur (102) selon la revendication 2, l'au moins une unité de source lumineuse (112) étant disposée sur le côté du système optique de collecte (160 ; 162) opposé au diviseur de faisceaux (150) et réalisé sous la forme d'une lentille de collecte (160).

7. Capteur (102) selon la revendication 2, l'au moins une unité de source lumineuse (112) étant disposée sur le même côté du système optique de collecte (160 ; 162) réalisé sous la forme d'une lentille de collecte (160) sur lequel se trouve également le diviseur de faisceaux (150) .

8. Capteur (102) selon la revendication 1, **caractérisé en ce qu'**un deuxième polarisateur (134 ; 234) est disposé avant le deuxième détecteur (132 ; 232), la direction de polarisation dudit polarisateur étant orientée perpendiculairement à la première direction de polarisation du premier polarisateur (124 ; 224).

9. Capteur (202) selon la revendication 1, le dispositif de focalisation étant un miroir parabolique (260) .

10. Capteur (202) selon la revendication 9, le premier détecteur (222) ou le deuxième détecteur (232) étant disposé pour l'essentiel dans la région du point focal (261) du miroir parabolique (260).

11. Capteur (102 ; 202) selon l'une quelconque des revendications précédentes, l'unité de source lumineuse (112 ; 212) comprenant trois sources lumineuses pour l'émission de lumière avec trois longueurs d'onde différentes.

12. Capteur (102 ; 202) selon l'une quelconque des revendications précédentes, comportant le premier détecteur (22) et le deuxième détecteur (32) prenant la forme de détecteurs uniques, le capteur (102 ; 202) étant adapté pour la détection tant d'eau et de glace sur la surface de chaussée (1a) que pour la détection du type de surface de chaussée (1a).

13. Capteur (102 ; 202) selon l'une quelconque des revendications précédentes, comprenant en outre un dispositif d'analyse (50) servant à analyser des données déterminées à l'aide du premier détecteur (122 ; 222) et au moins à l'aide du deuxième détecteur (132 ; 232).

14. Capteur (102 ; 202) selon la revendication 13, le dispositif d'analyse (50) étant disposé dans un carter (4) .

15. Utilisation d'un capteur (102 ; 202) selon l'une quelconque des revendications précédentes dans un véhicule (60), **caractérisée en ce que** le capteur (102 ; 202) est disposé dans la direction de conduite (6) avant une roue (62, 64), dans sa trace, au niveau du véhicule (60).

16. Utilisation d'un capteur (102 ; 202) selon la revendication 15, **caractérisée en ce que** le capteur (102 ; 202) est disposé à une hauteur de 10 cm à 100 cm au-dessus de la surface de chaussée (1a).
